# EUROPEAN PATENT SPECIFICATION

(11) **EP 1 553 427 B1**
(45) Date of publication and mention of the grant of the patent: **21.01.2015**
(21) Application number: 04012676.5
(22) Date of filing: 28.05.2004
(51) Int. Cl.: G01S 7/481, G01S 17/87, G02B 19/00, G02B 27/14, G02B 27/10

(54) **Pointing control device and bistatic LIDAR system**
Ausrichtungs- Steuergerät und bistatisches LIDAR- System
Dispositif de pointage et système LIDAR bistatique

(43) Date of publication of application: 13.07.2005
(73) Proprietor: Airbus DS GmbH, 82024 Taufkirchen (DE)
(72) Inventor: NIKOLOV, Susanne, 85579 Neubiberg (DE); HOLOTA, Wolfgang, 85649 Otterloh (DE); SCHULTE, Reiner Hans, 88709 Meersburg (DE); LE HORS, Lenaic, 31200 Toulouse (FR); HOLLIER, Pierre, 31130 Balma (FR)
(74) Representative: Binder, Karin Meta

(56) References cited:
- WO-A-2004/034084
- US-A- 5 013 151
- US-A- 5 208 654
- US-A- 5 343 284
- US-A1- 2003 147 142

## Description

LIDAR systems, in particular bistatic LIDAR systems, are already known from the state of the art. Bistatic LIDAR systems derive their name from having separate transmit and receive optics, while monostatic LIDAR systems have common transmit and receive optics.

WO2004/034084 describes a bistatic LIDAR device that comprises a transmit channel for forming a focussed transmit beam and a receive channel for forming a focussed receive beam. The device is arranged such that the focus of the transmit beam and the focus of the receive beam fall on a common axis when focussed to a certain distance. For further details of the general aspects of bistatic LIDAR systems, reference is made to WO2004/034084. In WO2004/034084 the focus of the one transmit beam is adjustable by variation of the relative position of an optical lens arrangement with respect to the exit aperture of a transmit optical fibre cable using a linear translation stage. It is further described that two or more receive channels can be provided in order to avoid errors due to spatial variations of the reflected light.

Differential Absorption LIDAR (DIAL) as one specific application of such LIDAR systems, is known for example from ESA SP-1257 (2) "The Five Candidate Earth Explorer Core Missions - WALES - WAter vapour LIDAR Exeriment in Space", ESA Publications Division, 2001, but also from WO2004/034084 already mentioned above. In DIAL devices, in particular laser light of two wavelengths is transmitted to a target and the difference in absorption of the first and second wavelengths is used to provide a measure of the molecular concentration of a particular gas species.

US 5,343,284 describes an airborne imaging LIDAR system which can be operated both bistatically and monostatically. In a first embodiment a retractable prism and a remote reflecting mirror are used to direct the laser transmitter beam, where the angle of the transmitter beam can be varied by moving the reflecting mirror along a track or rail. In a second embodiment, the camera of the imaging LIDAR system is placed on runners and displaced from the transmitter beam. A control is inserted so that the transmitter optics are directed to the area imaged by the camera. Described is the use of multiple pulsed laser transmitters or multiple optical fibers in order to transmit laser pulses and the use of multiple camera receivers. The bistatic angle (i.e. the angle between transmit and receive path) employed varies between 0.45 ° to 30 °, preferably between 10 ° to 20 °.

Beam control of a multi-beam laser beacon is known from US-A-2003/147142.

As already described, bistatic LIDAR systems have separate transmit and receive paths, which have to be co-aligned to a high accuracy to allow a sufficient small receiver instantaneous field of view IFOV (essential for the reduction of background light impact). For some applications (such as DIAL) it is furthermore essential that the same atmospheric volume is probed with different transmitted beams. The allowable alignment error between related transmitted beams is typically even more stringent than the alignment error between transmitter and receiver.

Such a co-alignment is difficult to maintain if the instrument is subjected to a varying thermal environment especially on a space craft with temperature variations over the orbit and mission time and the need for large receiver telescopes (>1m aperture) and high transmitter pulse energy (>50mJ) which requires optical systems of considerable size.

It is the objective of the invention to provide possibilities in order to overcome those technical problems. Those problems are solved by the technical features of the independent claims.

A first object of the invention is a LIDAR system comprising a transmit frontend with a transmitter pointing control device and a receive frontend. According to the invention, the pointing control device comprises a beam splitter by means of which an output bundle of laser rays is formed of separate input laser rays.

In particular, the beam splitter can be made such that the light rays travel the same way through the beam splitter material whether the output rays are parallel or inclined by a small angle, in particular an angle smaller than 30 °, preferably smaller than 15 °. This can be achieved in particular when the beam splitter comprises an arrangement of optical prism bodies and mirror bodies which in its entity forms a right prism, in particular a regular right prism. A right prism is a prism in which the top and bottom polygons lie on top of each other so that the vertical polygons connecting their sides are not only parallelograms, but rectangles. The faces of regular right prisms are regular polygons (for the respective definitions, see e.g. http://mathworld.wolfram.com/Prism.html). Such an arrangement of optical prisms, due to the regular form of the entire arrangement, can be adapted such that laser rays entering the beam splitter from the side face and exiting the beam splitter through a base face travel the same way through the beam splitter material whether the output rays are parallel or inclined by a small angle.

The beam splitter can be formed of a lower pyramid element and several upper pyramid elements which at least partly match the outer surface of the lower pyramid element. This is a very easy way to achieve that the entire prism and mirror arrangement forms a right prism, in particular a regular right prism. In particular, the lower pyramid element can be provided as an optical mirror body and the upper pyramid elements as optical prism bodies.

In a specific embodiment of the invention, the pointing control device comprises a mirror arrangement with one pointing mirror per transmitted beam, each mirror being arranged between a laser transmitter and the beam splitter. This arrangement facilitates the adjustment of the individual laser rays, as well as providing the above mentioned inclination of the laser rays.

Furtheron, the LIDAR system according to the invention can be provided such that the transmit frontend comprises a single transmitter telescope with subapertures for all transmitted laser rays.

A further object of the invention is a method of running a LIDAR system whereby an output bundle of laser rays is formed of separate input laser rays by means of a beam splitter, such that the light rays travel the same way through the beam splitter material whether the output rays are parallel or inclined by a small angle, in particular an angle smaller than 30 °, preferably smaller than 15 °.

A last object of the invention is an optical pointing control device, which can be used independently of the specific LIDAR applications described above. The pointing control device comprises a beam splitter by means of which an output bundle of light rays is formed of separate input laser rays.

The beam splitter of the pointing control device is preferably made such that the light rays travel the same way through the beam splitter material whether the output rays are parallel or inclined by a small angle, in particular an angle smaller than 30 °, preferably smaller than 15 °. In particular, the beam splitter comprises an arrangement of optical prism bodies and optical mirror bodies which forms a right prism, in particular a regular right prism. The beam splitter of the pointing control device can be formed of a lower pyramid element and several upper pyramid elements which at least partly match the outer surface of the lower pyramid element. In particular, the lower pyramid element can be an optical mirror body and the upper pyramid elements can be optical prism bodies. Furtheron, it can be provided that pointing control device comprises a mirror arrangement with one pointing mirror per transmitted beam, each mirror being arranged between a laser transmitter and the beam splitter.

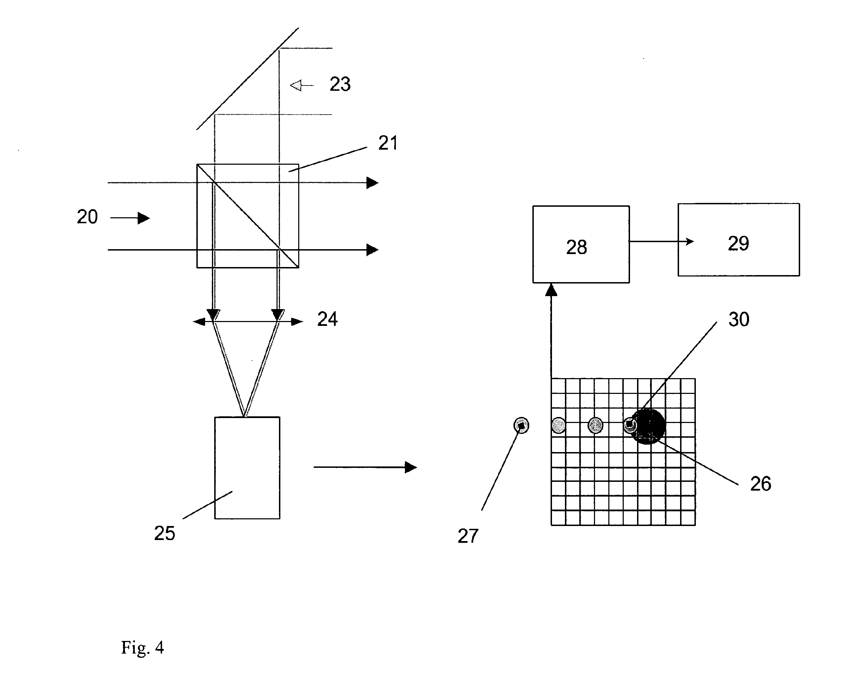

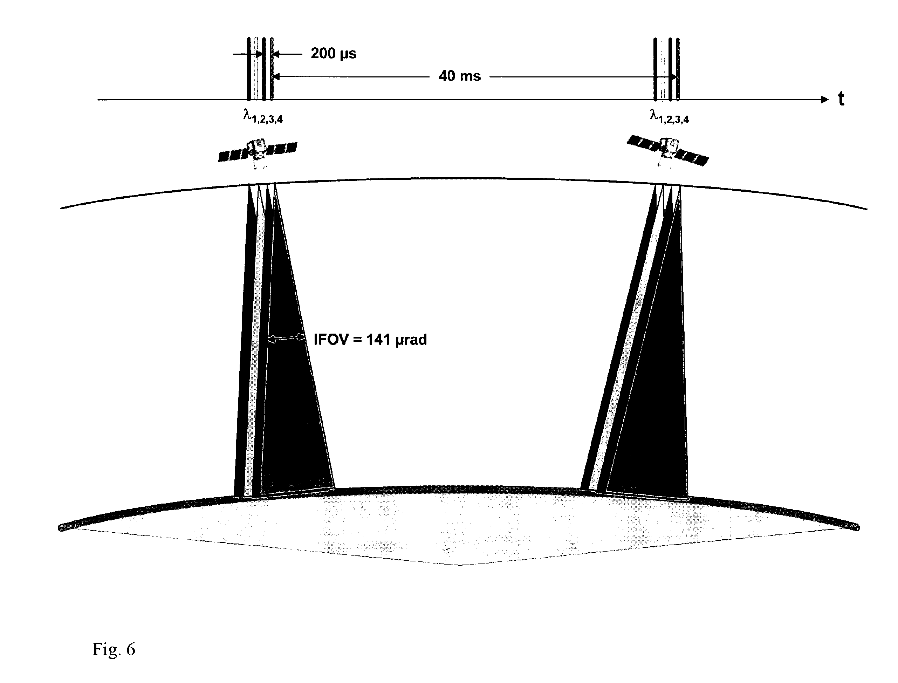

A specific example of the invention is now described with reference to figures 1 to 6.
Fig. 1 shows a schematic diagram of the LIDAR system
Fig. 2 shows a detailed view of the transmitter control device
Fig. 3 a) to d) show the transmitter pyramid beam splitter in detail
Fig. 4 shows a schematic view of the coalignment measurement between the transmit and receive field of view on a CCD-matrix
Fig. 5 shows the continuous mode operation principle
Fig. 6 shows the burst mode operation principle

The specific example of the invention addresses automatic alignment of different transmitted laser beams into generally different directions precisely defined relative to each other furthermore the alignment of the entire group of beams with the line of sight LOS of a common receiver. Both stages of alignment are maintained by continuously operating control loops in a way that thermomechanical distortions in critical subsystems receiver telescope and transmitter are insignificant to the instrument alignment.

The automatic pointing control loop is not dependent on a specific operation mode of the LIDAR system. It is applicable for a LIDAR operating in continuous mode as well as in burst mode. Both modes will be described in detail below.

### Instrument Architecture

The LIDAR system according to this embodiment of the invention operates as a bi-static differential absorption LIDAR (DIAL) which transmits laser light at a number of different (e.g. four different, closely separated) wavelengths into the same atmospheric volume. The four wavelengths are precisely controlled with respect to the water vapour absorption spectrum and chosen such that each wavelength falls within an absorption line of the water vapour absorption spectrum. In particular, the wavelengths can be chosen as follows: Three wavelengths are located at the centre wavelengths of water vapour absorption lines of different attenuation cross section. The forth (off-line) at a near by wavelengths with low attenuation due to water vapour. The intensity of the echo signal produced by the atmospheric target (molecular & aerosols backscattering) is measured. On ground evaluation of the intensity signals following the DIAL principle allows the determination of the water vapour concentration profile. More than two wavelengths are employed to cover the dynamic range of the atmospheric water vapour concentration, both over altitude and over climates.

Specific properties of the proposed instrument design are:
- Probing of a consistent air volume with all 4 wavelengths using the "continuous mode" operation principle
- Using a single transmitter telescope with subapertures for all transmitted beams
- Using individual transmitter lasers (Titan Sapphire) for each transmitted wavelength
- Using pump lasers (frequency doubled NdYAG) derived from the AEOLUS transmitter for pumping the Titan-Sapphire Lasers, one pump for each two Lasers
- Using a frequency stabilisation scheme based on seed lasers locked to a combination of water vapour absorption cell and wavemeter to guarantee seeding of the transmitters with signals precisely controlled wrt. the water vapour absorption spectrum
- Using in-field separation to multiplex the received echo signal to four different receivers, each equipped with a narrow band-filter (centred at the respective receiving frequency) to suppress background light
- Using calibration signals derived from the seed lasers to aid in tuning of the narrow band filters in the receivers

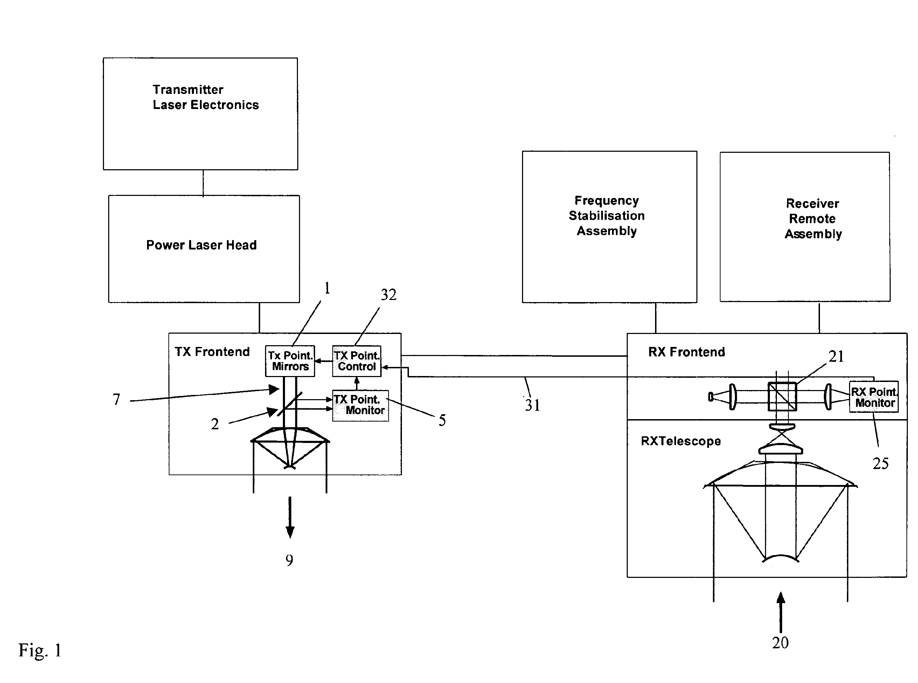

Fig. 1 shows a schematic diagram of the LIDAR system. In particular, Fig. 1 shows that the pointing arrangement of the transmit frontend (TX Pointing Control) is coupled to a signal detection arrangement (RX Pointing Monitor) of the receive frontend. The TX Pointing Control acts on TX Pointing Mirrors, which will be described in detail below, and is further connected to a TX Pointing Monitor.

### Transmitter Pointing Control Device (TPCD)

A transmitter pointing control device (TPCD) is provided in order to control two or more transmitted laser beams into exactly defined directions and maintain these directions to each other during the measurements. Figure 1 shows such transmitter pointing control device in detail. In particular, figure 1 shows an embodiment for 6 laser rays.

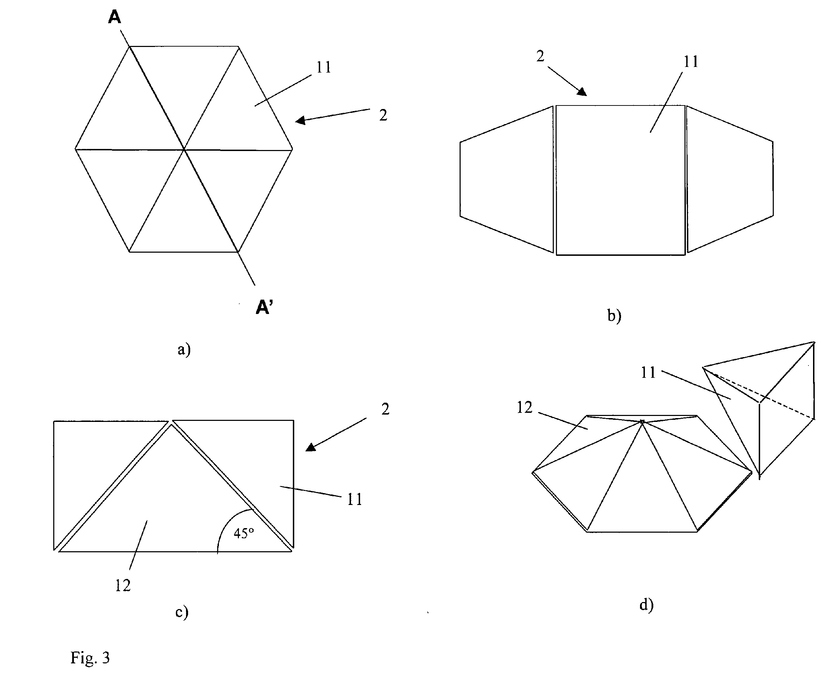

The TPCD consists of 2 axes actuated mirrors (TX pointing mirrors) 1, one per each transmit laser ray, produced by laser transmitter sources 8. The mirrors 1 reflect the light from the laser transmitter 8 to a central segmented beam splitter device 2 (pyramid BS). The larger part of the laser light is reflected by a pyramid mirror body 12 (see fig. 3) within the beam splitter device 2 in a way that a bundle 9 of outgoing rays (one from each transmitter 8) is formed. The bundle rays 9 are approximately parallel however allowing small angles between the ray directions which can be controlled by the pointing mirrors 1. The pyramid 12 is arranged such that a small fraction 10 (monitoring signal) of the transmitted light (main beam 9) can be observed on the backside (opposite to the direction of the outgoing bundle 9) in a way that the directional information of the transmitted main beam is preserved with great accuracy in the monitoring signal 10. The monitoring signal is passed through a TX focussing lens 3 and then to a 50/50 beam splitter 4. A specialised camera is used to measure the direction of the monitoring signals and hence the also the direction of the main beams. For this purpose, there is one Nominal TX Pointing CCD 5 and one Redundant TX Pointing CCD 6 which receive each 50 % of the monitoring signal 10.

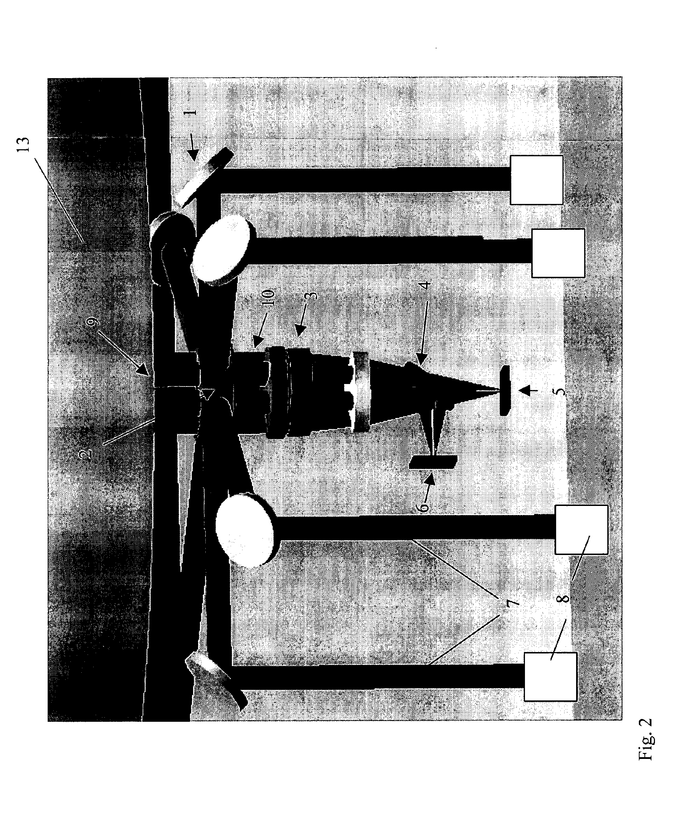

Fig. 3 shows in detail one example for the beam splitter 2 of the pointing control device (referred as TX mirror pyramid beam splitter), which in Fig. 2 is arranged below the primary mirror 9 of the LIDAR system. Fig. 3 a) shows a top view of the beam splitter 2, fig. 3 b) shows a side view of the beam splitter 2, fig. 3 c) shows a cross-sectional view of the beam splitter 2 along the line AA' indicated in fig. 3 a), and fig. 3 d) shows part of an exploded drawing of the beam splitter 2. The beam splitter 2 according to the example shown in fig. 3 consists of a 6-sided pyramid 12 forming an optical mirror body with six 4-sided pyramids 11 made of optical prisms as compensation prisms attached at 45° on each side of the mirror pyramid 12 in order to avoid ambiguities between position and angle of the incoming TX beam. The mirror pyramid 12 and the prism pyramids 11 as well as their arrangement can in particularly be clearly seen in fig. 3 c), fig. 3 d) shows one of the prism pyramids 11 in an exploded view. I.e. detached from the mirror pyramid 12. The other prism pyramids 11 are not shown in fig. 3 d). By means of this combination of a 6-sided mirror pyramid and six 4-sided prism pyramids, the entire beam splitter forms a regular right prism with hexagonal base faces (see fig.3a) and 3b)). The TX mirror pyramid beam splitter 2 works like a beam splitter cube: the major part is the outgoing TX beam 9 (bundle of rays). The beam splitter mirror pyramid 12 reflects the transmitted leakage from the HR coating of the 45°-facet (i.e. the part of the rays 7 which are not reflected by the HR coating on the pyramid 12, but transmitted through this coating) from the opposite facet down to the monitor CCDs 5, 6. The detector or detectors for monitoring the TX beam positions can be also any other detector like an APD.

This mirror pyramid BS 2 is the key-element of the TPCD and the invention is not only directed to the above shown design to combine 6 beams, but also to derived designs for the combination of 2-n beams by making 2-n facets of an appropriate n-sided pyramid.

The invention is also directed to use instead of a high reflection coating (HR coating) on the beam splitting surface the idea to use frustrated internal reflection between the facets of the n-sided pyramid and the compensation prisms. With a small gap between these surfaces adjustable reflection coefficients can be reached.

### Receiver Pointing Monitor (RPMO)

The backscattered echo signal 20 is received with a RX telescope and focussed by means of a relay optic to one ore more receivers (see fig. 1). Depending on the purpose and construction the receiver may employ different channels spectrally separated or by direction (in field separation). And either light intensity (DIAL) or spectral shift (Wind LIDAR) is measured. As the transmitted light is polarised also the echo signal 20 from the typically involved backscattering processes has a predictable stable polarization except for a small fraction of "de-polarization". Using polarization filters to effectively improve signal to background light ratio while maintaining high transmission for the wanted echo signal is a commonly applied technique in LIDAR.

This invention utilizes the small fraction of de-polarized light which is separated from the nominal signal 20 by a polarizing beam-splitter 21 for transmitter to receiver alignment. For this purpose the reflecting zone in the atmosphere is imaged via a focussing lens 24 on a position sensitive sensor RPMO 25 such as a CCD detector or a quadrant detector. The light used for this purpose is the depolarised echo signal 20 separated from the nominal echo signal by a polarising beam splitter 21. In parallel, light 23 from an internal calibration path is passed through the polarizing beam-splitter 21 and the focussing lens 24 onto the RPMO 25. The position sensitive detector is than used in a processing step 28 to determine the position 26 (ground footprint position) of the received echo in the FOV of the receiver telescope in a retrieval step 29 for footprint location. In parallel, the position 30 of the RX Off-line channel poison, i.e. the position of the light from the internal calibration path, is determined. Other lines channel positions 27 may lye outside the RPMO 25. A control loop using the TPCD as actuator is employed to position the received echo signal 20 at the location within the receiver telescope FOV which is optimum for the operation of the receiver. As the received signal monitoring only has to compensate for the thermo elastic induced pointing variation of the receiver telescope (because the TPCD in itself is capable to perform the co-alignment of the transmitter beams and removes most of the pointing variations induced by the transmitter) the control loop bandwidth can be low (up to several 100s) thus allowing long integration times for the evaluation of the (receiver pointing) calibration signal.
Figure: Coalignment Measurement between TX and RX FoV on a CCD matrix

The patent claims the right to monitor the RX FoV position on a CCD matrix, which will be delivered as input signal to the pointing monitor electronics. Furthermore the idea is claimed to use the depolarised light by the atmosphere, which would be loss for the scientific receiver channel anyway. The patent claims also the right to use instead of a CCD any other detector, e.g. like an APD.

### Pointing Control loop for Bistatic LIDAR systems

The invention is also directed to the provision of a pointing control loop 31 comprising a TX pointing control arrangement 32 that shall use read out signals of the spot positions on the CCD's in the transmitter pointing monitor 5, 6 and receiver pointing monitor 25 for maintaining the defined directions of the TX beams 7 to each other and of all TX beams together in the Receiver FOV by controlling a set of beam steering mirrors 1 in the TX path (see fig. 1). As can be clearly seen from fig. 1, the pointing arrangement of the transmit frontend is coupled to a signal detection arrangement of the receive frontend, i.e. signals received and processed by arrangements comprised in the receive frontend are used in the pointing control loop in order to effect a TX pointing control.

### Continuous Mode

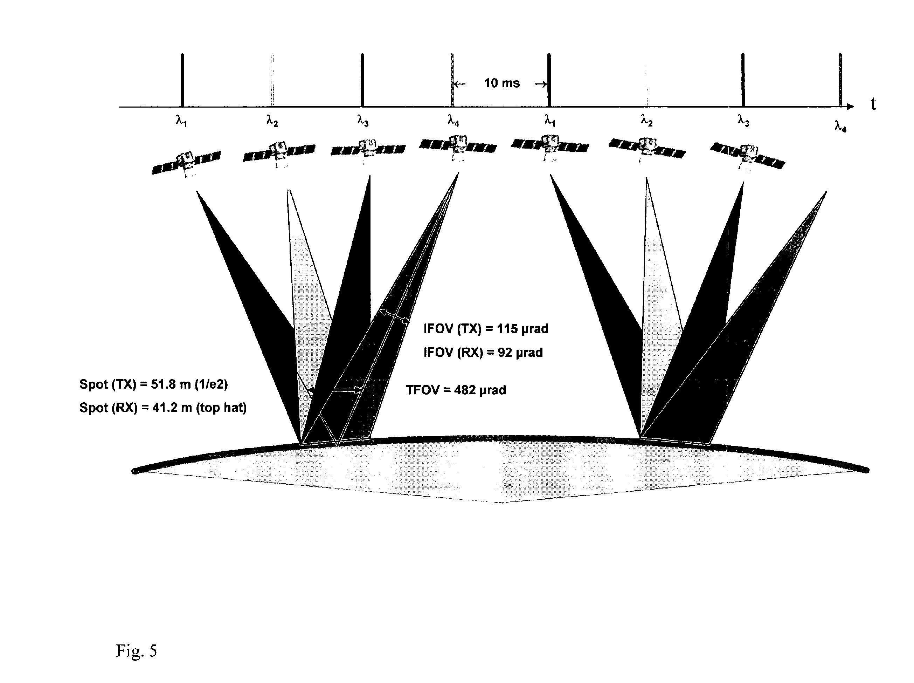

In the continuous mode operation example shown in fig. 5 four signals are transmitted with a constant temporal separation (here 10 ms) at defined points of time λ1, λ2, λ3, λ4 however into different pointing directions. The directions of four succeeding beams at λ1, λ2, λ3, λ4 are selected such that the footprint of the four beams is identical (i.e. compensating for the spacecraft motion). Two beams (at λ1, λ2 are looking fore and two aft (at λ3, λ4). Actually the reference altitude for the matched "footprints" is not the ground level but an altitude in mid troposphere to achieve best matching in altitude regions where high aerosol concentration can be expected.

Receiver and transmitter telescopes in an continuous mode instrument require larger FOVs as compared to burst mode, however using the same IFOV. The required parameters however are technically not difficulty to achieve. For the instrument design continuous mode has two considerable advantages:
- In-field separation can be used in the receiver avoiding the need to use frequency or polarisation for the multiplexing of the received echo signals. This allows to optimise the receiver filter chain entirely for the purpose of background light suppression, hence increasing measurement performance (reducing random error).
- The laser pump units can be designed for continuous PRF operation.

### Burst mode

In this mode the four signals are transmitted at points of time λ1, λ2, λ3, λ4 with close temporal separation (here 200 µs) with the same pointing. Bursts of four transmissions (in the four wavelengths) are separated by a larger gap (about 40 ms) such that an average PRF of 100Hz is achieved (as needed to transmit the average power necessary for sufficient measurement accuracy). Pulse separation within the bursts is of the order 200µs (equivalent to 1.5 m footprint shift between adjacent pulses). Minimum temporal separation results from unambiguous altitude range in the atmosphere (30km at 200µs) to avoid interference between the echoes received for different wavelength (the severity of the cross-talk effect depends also on the properties of the wavelength multiplexer). If a common pump laser is used for two or more transmitted wavelengths, the concept requires the capability to produce high power laser pulses at short time separation. Typically this will at least require a doubling of the energy storage networks in the power supplies for the pump laser diodes (as a re-charging is impossible in the short available time). The greatest disadvantage of the burst mode operation is that all transmitted beams and all received signals have the same line of sight. This is not a problem in the transmitter, because the effectively needed transmitter telescope aperture is small, such that the four beams can use different sub-apertures in an appropriately large transmitter telescope. The receiver telescope is however very large (>1.5m aperture diameter) hence it is not feasible to provide different apertures for the received signals. Consequently observing the four signals at the same LOS requires a frequency de-multiplexing of the incoming signal. Considering the close spacing of the signals in the frequency domain this is comparatively difficult to achieve at low transmission losses. In the example block schematic for an instrument using the burst mode principle a comparatively efficient method for the de-multiplexing is employed: Different orthogonal linear polarisation directions of the transmitted signals are used to form 2 groups of 2 beams which can be de-multiplexed at low losses using a polarising beam splitter. The narrow bandwidth stage of the background light filter (an etalon) is used in transmission and reflection to provide the separation (in the frequency domain) of the two signals with the same polarisation. The introduction of the polarisation multiplexing is useful to reduce transmission losses, however it introduces an additional error mechanism that might degrade the systematic error (de-polarisation of aerosols may differently influence on-line and off-line signal if they use different polarisations).

## Claims

1. A transmitter pointing control device for pointing at least two separated input light rays (7) produced by at least two light sources (8) comprising a beam splitter device (2) that comprises an arrangement of optical prism bodies and optical mirror bodies which form a right prism to ensure that the light rays travel the same way through the beam splitter material whether the output rays are parallel or inclined by a small angle which is less than 30°, preferably less than 15°, wherein the arrangement is arranged such that it reflects each input light ray (7) forming thereby a bundle of light rays (9) where the light rays of the bundle of light rays (9) along a direction are substantially parallel and that it reflects a monitoring signal (10) being a fraction of the bundle of light rays (9) substantially opposite to the direction of the bundle of light rays (9) and preserving the directional information of the bundle of light rays (9) in the monitoring signal (10).

2. Pointing control device according to claim 1, **characterized in that** the beam splitter comprises a regular right prism.

3. Pointing control device according to one of the claims 1 or 2, **characterized in that** the beam splitter is formed of a lower pyramid element and several upper pyramid elements which at least partly match the outer surface of the lower pyramid element.

4. Pointing control device according to claim 3, **characterized in that** the lower pyramid element is an optical mirror body and the upper pyramid elements are optical prism bodies.

5. Pointing control device according to one of the claims 1 to 4, **characterized in that** the pointing control device comprises a mirror arrangement with one pointing mirror per transmitted beam, each mirror being arranged between a laser transmitter and the beam splitter.

6. Method of running a LIDAR system comprising a transmitter pointing control device according to one of the claims 1 to 5 whereby an output bundle of laser rays along a direction is formed of separate input laser rays by means of a beam splitter, such that the light rays travel the same way through the beam splitter material whether the output rays are parallel or inclined by a small angle, which is an angle less than 30°, preferably less than 15°, and whereby a monitoring signal (10) being a fraction of the bundle of light rays (9) is reflected approximately opposite to the direction of the bundle of light rays (9) preserving the directional information of the bundle of light rays (9) in the monitoring signal (10).

7. Method according to claim 6, **characterized in that** the LIDAR system is run in a continuous mode operation.

8. Method according to claim 6, **characterized in that** the LIDAR system is run in a burst mode operation.

## Patentansprüche

1. Ausrichtungssteuerungs-Sendegerät zum Ausrichten von mindestens zwei einzelnen einfallenden Lichtstrahlen (7), die von mindestens zwei Lichtquellen (8) erzeugt werden, ein Strahlteilergerät (2) umfassend, das eine Anordnung optischer Prismenkörper und optischer Spiegelkörper umfasst, die ein gerades Prisma bilden, um sicherzustellen, dass die Lichtstrahlen den gleichen Weg durch das Strahlteilermaterial nehmen, unabhängig davon ob die ausgehenden Strahlen parallel liegen oder in einem kleinen Winkel geneigt sind, der kleiner als 30° ist, vorzugsweise kleiner als 15°, wobei die Anordnung derart angeordnet ist, dass sie jeden einfallenden Lichtstrahl (7) reflektiert und dadurch ein Lichtstrahlenbündel (9) bildet, wobei die Lichtstrahlen des Lichtstrahlenbündels (9) entlang einer Richtung im Wesentlichen parallel liegen, und dass sie ein Überwachungssignal (10), das eine Fraktion des Lichtstrahlenbündels (9) ist, im Wesentlichen entgegengesetzt der Richtung des Lichtstrahlenbündels (9) reflektiert und die Richtungsinformation des Lichtstrahlenbündels (9) im Überwachungssignal (10) bewahrt.

2. Ausrichtungssteuerungsgerät nach Anspruch 1, **dadurch gekennzeichnet, dass** der Strahlteiler ein regelmäßiges gerades Prisma umfasst.

3. Ausrichtungssteuerungsgerät nach einem der Ansprüche 1 oder 2, **dadurch gekennzeichnet, dass** der Strahlteiler aus einem unteren Pyramidenelement und mehreren oberen Pyramidenelementen gebildet ist, die zumindest teilweise zu der Außenfläche des unteren Pyramidenelements passen.

4. Ausrichtungssteuerungsgerät nach Anspruch 3, **dadurch gekennzeichnet, dass** das untere Pyramidenelement ein optischer Spiegelkörper und die oberen Pyramidenelemente optische Prismenkörper sind.

5. Ausrichtungssteuerungsgerät nach einem der Ansprüche 1 bis 4, **dadurch gekennzeichnet, dass** das Ausrichtungssteuerungsgerät eine Spiegelanordnung mit einem Ausrichtungsspiegel pro gesendetem Strahl umfasst, wobei jeder Spiegel zwischen einem Lasersender und dem Strahlteiler angeordnet ist.

6. Verfahren zum Betreiben eines LIDAR-Systems, das ein Ausrichtungssteuerungs-Sendegerät nach einem der Ansprüche 1 bis 5 umfasst, wobei aus einzelnen einfallenden Laserstrahlen mit Hilfe eines Strahlteilers derart ein in eine Richtung ausgehendes Laserstrahlenbündel gebildet wird, dass die Lichtstrahlen den gleichen Weg durch das Strahlteilermaterial nehmen, unabhängig davon ob die ausgehenden Strahlen parallel liegen oder in einem kleinen Winkel geneigt sind, der kleiner als 30° ist, vorzugsweise kleiner als 15°, und wobei ein Überwachungssignal (10), das eine Fraktion des Lichtstrahlenbündels (9) ist, ungefähr entgegengesetzt der Richtung des Lichtstrahlenbündels (9) reflektiert wird, wobei die Richtungsinformation des Lichtstrahlenbündels (9) im Überwachungssignal (10) bewahrt wird.

7. Verfahren nach Anspruch 6, **dadurch gekennzeichnet, dass** das LIDAR-System in einem kontinuierlichen Betriebsmodus betrieben wird.

8. Verfahren nach Anspruch 6, **dadurch gekennzeichnet, dass** das LIDAR-System in einem Stoßbetriebsmodus betrieben wird.

## Revendications

1. Dispositif de commande de pointage d'émetteur pour pointer au moins deux faisceaux de lumière d'entrée (7) produits par au moins deux sources de lumière (8), comprenant un dispositif séparateur de faisceau (2) qui comprend un arrangement de corps de prismes optiques et de corps de miroirs optiques qui forment un prisme droit pour garantir que les faisceaux de lumière parcourent le même trajet à travers le matériau séparateur de faisceau, et ce, que les faisceaux de sortie soient parallèles ou inclinés d'un petit angle qui est inférieur à 30°, de préférence inférieur à 15°, où l'arrangement est tel qu'il réfléchit chaque faisceau de lumière d'entrée (7) formant ainsi un ensemble de faisceaux de lumière (9), où les faisceaux de lumière de l'ensemble de faisceaux de lumière (9) le long d'une direction sont sensiblement parallèles, et tel qu'il réfléchit un signal de surveillance (10) étant une fraction de l'ensemble de faisceaux de lumière (9) sensiblement opposés à la direction de l'ensemble de faisceaux de lumière (9) et préservant les informations de direction de l'ensemble de faisceaux de lumière (9) dans le signal de surveillance (10).

2. Dispositif de commande de pointage selon la revendication 1, **caractérisé en ce que** le séparateur de faisceau comprend un prisme droit régulier.

3. Dispositif de commande de pointage selon l'une des revendications 1 ou 2, **caractérisé en ce que** le séparateur de faisceau est formé d'un élément pyramidal inférieur et de plusieurs éléments pyramidaux supérieurs qui, au moins partiellement, correspondent à la surface externe de l'élément pyramidal inférieur.

4. Dispositif de commande de pointage selon la revendication 3, **caractérisé en ce que** l'élément pyramidal inférieur est un corps de miroir optique et **en ce que** les éléments pyramidaux supérieurs sont des corps de prismes optiques.

5. Dispositif de commande de pointage selon l'une des revendications 1 à 4, **caractérisé en ce que** le dispositif de commande de pointage comprend un arrangement de miroirs avec miroir de pointage par faisceau transmis, chaque miroir étant disposé entre un émetteur laser et le séparateur de faisceau.

6. Procédé pour faire fonctionner un système LIDAR comprenant un dispositif de commande de pointage d'émetteur selon l'une des revendications 1 à 5, au moyen duquel un ensemble de sortie de faisceaux de lumière le long d'une direction est formé de faisceaux laser d'entrée séparés au moyen d'un séparateur de faisceau, de manière à ce que les faisceaux de lumière parcourent le même trajet à travers le matériau séparateur de faisceau, et ce, que les faisceaux de sortie soient parallèles ou inclinés d'un petit angle qui est inférieur à 30°, de préférence inférieur à 15°, et au moyen duquel un signal de surveillance (10) étant une fraction de l'ensemble de faisceaux de lumière (9) est réfléchi dans une direction sensiblement opposée à la direction de l'ensemble de faisceaux de lumière (9) en préservant les informations de direction de l'ensemble de faisceaux de lumière (9) dans le signal de surveillance (10).

7. Procédé selon la revendication 6, **caractérisé en ce que** le système LIDAR fonctionne dans un mode de fonctionnement continu.

8. Procédé selon la revendication 6, **caractérisé en ce que** le système LIDAR fonctionne dans un mode de fonctionnement en salve.
